# EUROPÄISCHE PATENTSCHRIFT

(11) **EP 0 974 486 B1**
(45) Veröffentlichungstag und Bekanntmachung des Hinweises auf die Patenterteilung: **20.10.2004**
(21) Anmeldenummer: 99114340.5
(22) Anmeldetag: 21.07.1999
(51) Int. Cl.: B60R 1/12

(54) **Beleuchtungseinrichtung für ein Kraftfahrzeug**
Vehicle lighting device
Dispositif d'éclairage pour véhicule

(30) Priorität: 24.07.1998 DE 19833299
(43) Veröffentlichungstag der Anmeldung: 26.01.2000
(73) Patentinhaber: Donnelly Hohe GmbH & Co. KG, 97903 Collenberg (DE)
(72) Erfinder: Buchalla, Harald, Dr., 63916 Amorbach (DE); Fürst, Peter, 63927 Bürgstadt (DE); Polzer, Herwig, 63897 Miltenberg (DE)
(74) Vertreter: Böck, Bernhard, Dipl.-Ing.

(56) Entgegenhaltungen:
- EP-A- 0 165 817
- EP-A- 0 496 921
- EP-A- 0 820 901
- DE-A- 3 911 140
- US-A- 4 781 436

## Beschreibung

Die Erfindung betrifft eine Beleuchtungseinrichtung nach dem Oberbegriff des Patentanspruchs 1.

Beleuchtungseinrichtungen dieser Art werden in die Außen- oder Innenrückspiegel von Kraftfahrzeugen eingebaut und dienen entweder der Beleuchtung des Innenraums oder der Beleuchtung der Fahrbahnoberfläche im Einstiegsbereich vor den Fahrzeugtüren. Das von dem Leuchtmittel erzeugte Licht tritt dabei an einer Spiegelgehäuseöffnung aus und breitet sich von dort ausgehend strahlenförmig aus. Die erzeugte Lichtstärke in den verschiedenen Bereichen des Beleuchtungsfeldes hängt somit im wesentlichen vom Abstand des jeweiligen Bereichs zur Beleuchtungseinrichtung und vom Einstrahlwinkel ab.

Da der Einbauort der Beleuchtungseinrichtung durch die Positionierung des Außen- oder Innenrückspiegels vorgegeben ist, ergibt sich in vielen Fällen eine nicht optimale Verteilung der Beleuchtungsstärke im Beleuchtungsfeld. Insbesondere weit entfernte Stellen werden nur relativ schwach beleuchtet, weshalb eine hohe Beleuchtungsleistung erforderlich ist. Es ist deshalb bekannt, im Strahlengang der Beleuchtungseinrichtung optische Bauteile anzuordnen, durch die die Verteilung der Beleuchtungsstärke beeinflußt werden kann. Wegen der kostengünstigen Herstellung und der kompakten Abmaße sind für diesen Einsatzzweck insbesondere Fresnellinsen vorgeschlagen worden. Fresnellinsen sind plattenartige Lichtbrechungselemente, beispielsweise aus Glas oder Kunststoff, die zumindest auf einer Seite eine Oberflächenstruktur aufweisen, durch die die Fresnellinse in mehrere Lichtbrechungszonen aufgeteilt wird. Die Lichtbrechungszonen entsprechen dabei kreisringförmigen Linsenabschnitten, die stufenförmig in der Plattenebene zusammengeschoben sind, so daß die Lichtbrechung in einer Fresnellinse der Lichtbrechung in einem dreidimensionalen Linsenkörper ungefähr entspricht.

Aus der EP 0 165 817 A2 und der EP 0 820 901 A2 sind gattungsgemäße Beleuchtungseinrichtungen am Rückspiegel von Kraftfahrzeugen bekannt. Zur Ablenkung der Lichtstrahlen ist dem Leuchtmittel jeweils ein Fresnelprisma vorgeordnet.

Nachteilig an diesen bekannten Beleuchtungseinrichtungen ist deren relativ geringe Lichtausbeute.

Aufgabe der vorliegenden Erfindung ist es deshalb eine Beleuchtungseinrichtung zu liefern, die eine verbesserte Lichtausbeute ermöglicht.

Diese Aufgabe wird durch eine Beleuchtungseinrichtung nach der Lehre des Patentanspruchs 1 gelöst.

Bevorzugte Ausführungsformen der Erfindung sind Gegenstand der Unteransprüche.

Um eine hohe Lichtausbeute der Beleuchtungseinrichtung zu erreichen, ist erfindungsgemäß, vor dem Fresnelprisma eine Kondensorlinse im Strahlengang anzuordnen. Durch die Kondensorlinse wird ein großer Anteil des von dem Leuchtmittel ausgehenden Lichts gesammelt und auf das Fresnelprisma gelenkt, so daß ein höherer Lichtanteil auf das Fresnelprisma fällt.

Nach einer bevorzugten Ausführungsform der Erfindung sind die Prismenzonen linear parallel zueinander verlaufend in dem Fresnelprisma angeordnet. Solche Fresnelprismen können kostengünstig hergestellt werden, da die notwendige Plattenkontur aus einem Endlosmaterial ausgeschnitten oder ausgestanzt werden kann oder durch Spritzguß herstellbar ist. Es sind aber selbstverständlich auch Fresnelprismen mit beliebig gekrümmt verlaufenden Prismenzonen denkbar.

Wird die Beleuchtungseinrichtung in einem Außenrückspiegel eingebaut, ist es vorteilhaft, wenn die Prismenzonen im wesentlichen senkrecht zur Fahrzeuglängsachse verlaufen. Die einzelnen Prismenzonen sind dabei so zu gestalten, daß das Licht zum Fahrzeugheck hin gebrochen wird. Durch diese Anordnung ist es möglich, den Einstiegsbereich vor den Fahrzeugtüren im wesentlichen vollständig auszuleuchten, ohne daß Bereiche der Fahrbahnoberflächen, die außerhalb des Einstiegsbereichs liegen, unnötig ausgeleuchtet werden. Die eingesetzte Lichtenergie wird also optimal auf das gewünschte Beleuchtungsfeld verteilt.

Der an der Unterseite des Außenrückspiegels austretende Lichtstrahl wird durch das Fresnelprisma beispielsweise so abgelenkt, daß die Vorderkante des Lichtkegels im Bereich der Vorderkante der Tür und die Hinterkante des austretenden Lichtkegels am hinteren Ende des Einstiegsbereichs, beispielsweise vor dem Hinterrad, auf die Fahrbahnoberfläche auftrifft. Im Ergebnis wird der Lichtkegel durch Lichtbrechung auf den Einstiegsbereich konzentriert. Ohne Ablenkung des Lichtstrahls würde sich dieser gleichmäßig von der Lichtquelle her ausbreiten, so daß ein großer Bereich vor dem Einstiegsbereich unnötigerweise beleuchtet würde.

Die Prismenzonen eines regelmäßigen Fresnelprismas weisen alle den gleichen Brechungswinkel auf, so daß parallel einfallendes Licht in allen Prismenzonen um den gleichen Winkelbetrag abgelenkt wird. Erfindungsgemäß können auch Fresnelprismen eingesetzt werden, die zumindest zwei Prismenzonen mit unterschiedlichen Brechungswinkeln aufweisen. Dadurch kann erreicht werden, daß das Licht an den verschiedenen Prismenzonen mit unterschiedlichen Winkeln abgelenkt wird, so daß je nach Wahl der verschiedenen Brechungswinkel der Lichtstrahl in verschiedenen Raumsektoren gesammelt oder gestreut werden kann.

Wird die Beleuchtungseinrichtung in einen Außenrückspiegel zur Beleuchtung des Einstiegsbereichs eingesetzt, ergibt sich aufgrund der Einbausituation der Beleuchtungseinrichtung im Bodenbereich des Außenspiegels eine zur Fahrbahnoberfläche nahezu parallele Lichtaustrittsfläche. Der Außenspiegel weist eine Außenspiegelanordnung auf mit einem Gehäuse, in dem ein wahlweise elektrochromatisch oder konventionell (beispielsweise als metallische Reflektorschicht aus Chrom oder Titan auf einem gläsernen Substrat) ausgebildetes Reflektorelement angeordnet ist, wobei der Reflektor vorzugsweise mittels eines ebenfalls im Gehäuse der Spiegelanordnung angeordneten, manuell oder elektrisch betätigbaren Stellgetriebes positionierbar ist. Die Außenspiegelanordnung weist außerdem eine Befestigungsvorrichtung auf, mit der das Gehäuse an der Fahrzeugseite befestigbar ist. Die Befestigungsvorrichtung kann als Abreiß- oder Beiklappvorrichtung ausgebildet sein, wie bei den aus dem Stand der Technik bekannten Außenrückspiegeln, und kann einen Spiegelfuß und/oder eine Fußabdeckklappe aufweisen. Die Beleuchtungseinrichtung gemäß der vorliegenden Erfindung kann entweder im Gehäuse der Spiegelanordnung oder in der Befestigungsvorrichtung der Spiegelanordnung angeordnet sein, so daß beispielsweise der von der Beleuchtungseinrichtung erzeugte Lichtstrahl entweder vom Gehäuse der Anordnung oder von dem Spiegelfuß der Anordnung ausgehend nach unten und nach hinten projiziert wird zur Ausleuchtung eines Sicherheitsbereichs auf dem Boden neben den Fahrzeugtüren. Die auf der Fahrbahn resultierende senkrechte Beleuchtungsstärke sinkt u. a. proportional zum Quadrat des Abstands von der Beleuchtungsquelle und weiterhin mit dem Kosinus des Einfallswinkels. Da der Außenrückspiegel auf der zur Fahrzeugfront gewandten Seite der Fahrzeugtür angeordnet ist, muß, um eine weitgehend gleichmäßige Beleuchtungsstärkenverteilung auf der Fahrbahnoberfläche im Einstiegsbereich, der sich bis zum Hinterrad erstrecken kann, zu erlangen, ein Großteil der Lichtenergie des Lichtstrahls in Richtung des Fahrzeughecks konzentriert abgestrahlt werden.

Es ist deshalb vorteilhaft, wenn der Brechungswinkel der einzelnen Prismenzonen derart gewählt ist, daß der Winkel zwischen zwei an benachbarten Prismenzonen austretenden Lichtstrahlen mit zunehmendem Abstand zur vordersten Prismenzone abnimmt. Die vorderste Prismenzone bezeichnet dabei die Prismenzone, die der Fahrzeugfront am nächsten liegt. Durch diese ortsabhängige Brechungswinkelverteilung wird die gewünschte Konzentration der Lichtenergie zum Fahrzeugheck hin ermöglicht, da die Konzentration der Lichtstrahlen in Richtung des Fahrzeughecks zunimmt. Die jeweils für eine bestimmte Ausführungsform notwendige Brechungswinkelverteilung der einzelnen Prismenzonen hängt von einer Vielzahl von Einflußfaktoren, wie beispielsweise der Reflektorgeometrie und dem Leuchtmittel, ab. Bei komplexen Beleuchtungseinrichtungen muß für jede Prismenzone gesondert der richtige Brechungswinkel bestimmt werden, was vorteilhaft durch rechnergestützte Simulationen erfolgen kann.

Um eine Beschädigung der empfindlichen Prismenstruktur, die in eine Seite der Platte eingeprägt ist, auszuschließen, sollte die Prismenstruktur vorzugsweise zur Innenseite des Spiegelgehäuses weisend in der Beleuchtungseinrichtung angeordnet sein. Die außenliegende Seite der Platte kann eine glatte oder leicht angerauhte Oberfläche aufweisen.

Die Konzentration der Lichtenergie in einer bestimmten Vorzugsrichtung durch eine ortsabhängige Brechungswinkelverteilung der einzelnen Prismenzonen ist nach oben hin begrenzt, da die Ablenkung des aus der Lichtquelle unter einem bestimmten Winkel auf die Prismenzonen auftretenden Lichts nur innerhalb bestimmter Grenzen möglich ist. Ist eine Ablenkung erforderlich, beispielsweise weil ein sehr großer Einstiegsbereich gleichmäßig ausgeleuchtet werden soll, kann dies dadurch erreicht werden, daß die Kondensorlinse dezentriert in der Beleuchtungseinrichtung angeordnet ist, das heißt, die optische Mittelachse der Kondensorlinse parallel verschoben zur optischen Mittelachse der Beleuchtungseinrichtung verläuft. Durch die dezentrale Anordnung der Kondensorlinse treffen die Lichtstrahlen mit einer asymmetrischen Winkelverteilung auf das Fresnelprisma auf, so daß die Konzentration der Lichtenergie in einer Vorzugsrichtung verstärkbar ist.

Alle optischen Bauteile, wie beispielsweise die Fresnelprismen, können aus Glas oder aus einem optischen Polymer, wie beispielsweise Polycarbonat, Acryl oder Allyl-Diglycol-Carbonat, hergestellt sein.

Nach einer bevorzugten Ausführungsform der Erfindung ist hinter dem Fresnelprisma eine Blende im Strahlengang angeordnet, die den Strahlengang bereichsweise unterbricht. Da das aus dem Fresnelprisma austretende Strahlenbündel aus im wesentlichen parallelen oder divergenten, nicht durchmischten Lichtstrahlen besteht, kann durch Anordnung einer Blende ein bestimmter Bereich gezielt abgeschattet werden. Bei durchmischten,
d. h. sich kreuzenden Strahlen ist eine scharfe Bündelbegrenzung durch eine Blende nicht möglich. Die entstehende Beleuchtungsstärkenverteilung kann so einfach und wirkungsvoll den Anforderungen nach einer eventuell scharfen äußeren Berandung angepaßt werden. Dieser Effekt ist insbesondere dafür nutzbar, um trotz einer optimalen Ausleuchtung des Bodenbereichs vor dem Fahrzeug eine nahezu vollständig dunkle Fahrzeugtür zu gewährleisten. Da durch eine Abdunklung der Fahrzeugtür die Irritation von anderen Verkehrsteilnehmern ausgeschlossen ist, wird die Abnahme einer erfindungsgemäßen Beleuchtungseinrichtung durch die entsprechenden Zulassungsgremien erleichtert. Außerdem kann die sonst bei Systemen mit deutlich sichtbaren Türreflexen übliche Begrenzung der Leuchtdauer, beispielsweise auf 20 Sekunden, entfallen.

Um eine hohe Lichtausbeute zu erreichen, sollte in der Beleuchtungseinrichtung ein Reflektor, insbesondere ein Kugelreflektor, eingebaut werden. Der Reflektor sammelt einen Teil der Lichtstrahlen, die vom Leuchtmittel nicht in Richtung der Gehäuseöffnung abgestrahlt werden und reflektiert sie in die gewünschte Abstrahlrichtung. Durch den Einsatz eines Kugelreflektors kann eine weitgehende Parallelisierung des reflektierten Lichts erreicht werden.

Eine erfindungsgemäße Beleuchtungseinrichtung kann in an sich beliebiger Art und Weise aufgebaut sein. Vorteilhaft ist es, wenn das Leuchtmittel in einem Tubus angeordnet ist, an dessen erstem axialen Ende ein Reflektor angeordnet ist und an dessen gegenüberliegendem Ende das erzeugte Licht austreten kann, wobei im Strahlengang zumindest ein Fresnelprisma angeordnet ist. Durch diese Gestaltung wird der größte Teil des erzeugten Lichts in der gewünschten Richtung abgestrahlt, wobei alle abgestrahlten Lichtstrahlen durch das Fresnelprisma in die gewünschte Vorzugsrichtung abgelenkt werden.

Hauptaufgabe des Tubus ist die Aufnahme und räumliche Fixierung der einzelnen Komponenten der Beleuchtungseinrichtung. Außerdem gewährleistet der Tubus den Schutz der Beleuchtungseinrichtung gegen äußere Einflüsse wie Schmutz, Staub, Wasser und ähnlichem. Die optischen Eigenschaften des erzeugten Lichtstrahls können weiter verbessert werden, wenn die Lichtstrahlung die, von dem Leuchtmittel ausgehend, weder auf den Reflektor noch direkt auf das Fresnelprisma bzw. auf die Kondensorlinse fällt, durch Absorption vernichtet wird. Durch die Absorption dieses Lichtanteils ist es möglich, daß weitgehend paralleles oder divergentes und nicht durchmischtes Licht abgestrahlt wird.

Die gewünschte Lichtabsorption durch die Tubusoberfläche kann beispielsweise dadurch erreicht werden, daß der Tubus mit einer mattschwarzen Innenbeschichtung ausgestattet wird. Durch die mattschwarze Beschichtung nimmt der Tubus jedoch einen Großteil der Abwärme der Beleuchtungseinrichtung auf, so daß er sich in unerwünschter Weise stark aufheizt. Es ist deshalb vorteilhaft, wenn der Tubus aus einem Material, beispielsweise Kunststoff oder Glas, hergestellt ist, das Lichtwellen im sichtbaren Wellenlängenbereich absorbiert und für Lichtwellen im Infrarotbereich, insbesondere im Wellenlängenbereich der Wärmestrahlung bis 4µm, transparent ist. Im Ergebnis kann dadurch das sichtbare Licht in gewünschter Weise absorbiert werden, wobei die Wärmestrahlung die Tubuswandung durchtritt und zur Seite hin abgestrahlt wird. Ein Großteil der Abwärme wird somit als Wärmestrahlung abgestrahlt, so daß eine übermäßige Aufheizung des Tubus ausgeschlossen ist.

Eine Möglichkeit, ein Material mit den gewünschten Absorptions- bzw. Transparenzeigenschaften herzustellen ist es, z.B. einen Kunststoff oder Glas aus einer transparenten Grundkomponente herzustellen, die mit einem Farbstoff dotiert ist, wobei der Farbstoff sichtbares Licht absorbiert und für Infrarotstrahlung transparent ist. Der in dem transparenten Kunststoff eingelagerte Farbstoff wirkt dabei als wellenlängenabhängiger Filter. Als Grundkomponente kann ein an sich beliebiger infrarottransparenter Kunststoff eingesetzt werden, der die erforderlichen Eigenschaften bezüglich Festigkeit und Wärmebeständigkeit aufweist und mit einem entsprechenden Farbstoff dotiert werden kann.

Zur Ansteuerung der erfindungsgemäßen Beleuchtungseinrichtung kann insbesondere das "Öffnen-Signal" der drahtlosen Fernbedienung einer Schließanlage eingesetzt werden. Dadurch kann erreicht werden, daß der Einstiegsbereich des Kraftfahrzeugs bereits bei Annäherung der Fahrzeuginsassen ausgeleuchtet wird.

Nachfolgend wird die Beleuchtungseinrichtung anhand lediglich bevorzugte Ausführungsformen darstellender Zeichnungen näher erläutert. Es zeigt:
- **Fig. 1**: in schematischer Darstellung einen Prismenkörper und ein daraus abgeleitetes Fresnelprisma im Querschnitt;
- **Fig. 2**: eine erste Ausführungsform eines Fresnelprismas in Ansicht von oben;
- **Fig. 3**: in schematischer Darstellung die Lichtbrechung an einem Fresnelprisma;
- **Fig. 4**: in schematischer Darstellung die Lichtbrechung an einer dezentriert angeordneten Kondensorlinse;
- **Fig. 5**: in schematischer Darstellung die Lichtbrechung an einer Anordnung aus einer dezentriert angeordneten Kondensorlinse und einem Fresnelprisma;
- **Fig. 6**: in schematischer Darstellung die Lichtbrechung an einer Anordnung nach **Fig. 5** mit einem zusätzlichen Kugelreflektor;
- **Fig. 7**: eine erfindungsgemäße Beleuchtungseinrichtung in einer schematischen Explosionsdarstellung;
- **Fig. 8**: eine erfindungsgemäße Beleuchtungseinrichtung im Längsschnitt entlang der Schnittlinie I-I;
- **Fig. 9**: die Beleuchtungseinrichtung nach **Fig. 8** in Ansicht von unten;
- **Fig. 10**: die Beleuchtungsstärkenverteilung im Lichtstrahl einer in einem Außenrückspiegel angeordneten erfindungsgemäßen Beleuchtungseinrichtung;
- **Fig. 11**: eine zweite Ausführungsform eines Fresnelprismas in Ansicht von oben.

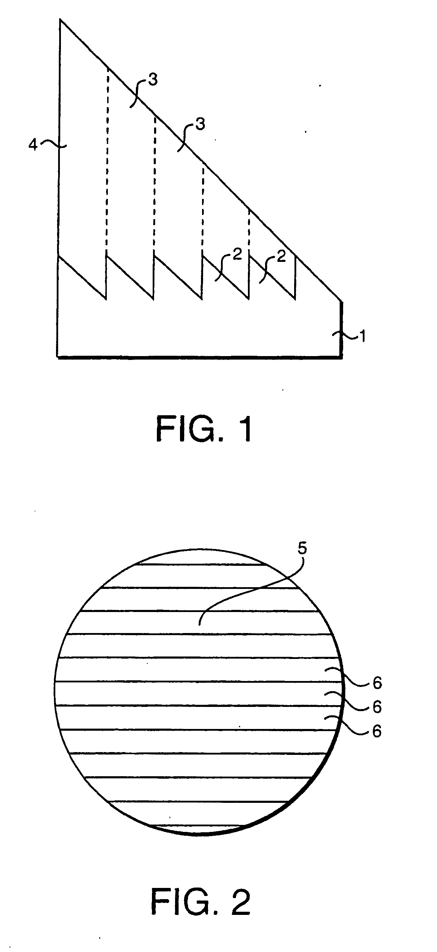

**Fig. 1** zeigt ein Fresnelprisma 1 mit insgesamt sechs Lichtbrechungszonen 2, wobei die Lichtbrechungszonen den stufenförmig zusammengeschobenen Prismenzonen 3 eines Prismenkörpers 4 entsprechen. Im Ergebnis sind die Lichtbrechungszonen 2 des Fresnelprismas 1 als Prismenzonen ausgebildet. Erfindungsgemäß können die Eigenschaften des Fresnelprismas von Prismen grundsätzlich beliebiger Gestalt abgeleitet sein. Die Flanken der Lichtbrechungszonen können eben oder gekrümmt ausgebildet sein und der Brechungswinkel der verschiedenen Lichtbrechungszonen kann unterschiedlich sein, was durch eine unterschiedliche Neigung der Flanken erreichbar ist. Bei dem regelmäßigen Fresnelprisma 1 weisen alle Lichtbrechungszonen 2 denselben Brechungswinkel auf.

**Fig. 2** zeigt eine Ausführungsform 5 eines Fresnelprismas in Ansicht von oben. Die Prismenzonen 6 verlaufen linear parallel zueinander, so daß diese Ausführungsform mit einer kreisrunden Außenkontur aus einem Endlosmaterial ausgestanzt werden kann. Die parallel zueinander verlaufenden Prismenzonen 6 erlauben die Ablenkung eines Lichtstrahls in einer Vorzugsrichtung, die senkrecht zum Verlauf der Prismenzonen 6 orientiert ist.

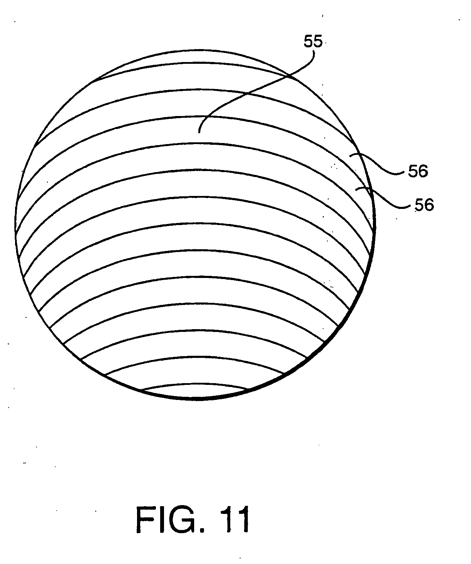

**Fig. 11** zeigt eine Ausführungsform 55 eines Fresnelprismas in Ansicht von oben. Die Prismenzonen 56 verlaufen in zentrischen Kreisbögen parallel zueinander, so daß diese Ausführungsform durch Ausschneiden aus einer normalen zentrischen Fresnellinse hergestellt werden kann. Die gekrümmt zueinander verlaufenden Prismenzonen 56 erlauben die prismatische Ablenkung eines Lichtstrahls in einer Vorzugsrichtung und zugleich eine Sammel- oder Streuwirkung.

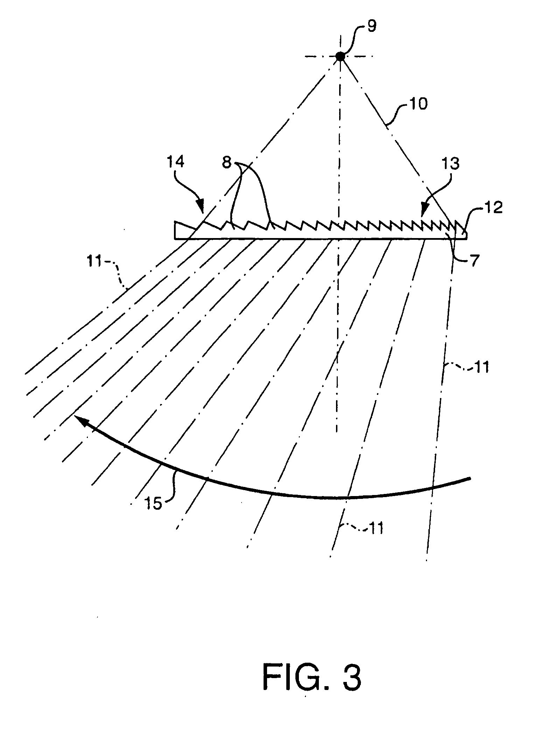

Der in **Fig. 3** schematisch dargestellte Strahlengang zeigt die Wirkung der Lichtbrechung in einem Fresnelprisma 7, dessen linear parallel zueinander verlaufende Lichtbrechungszonen 8 unterschiedliche Brechungswinkel aufweisen. Das von einem Leuchtmittel 9 ausgehende Licht fällt in einem Lichtkegel 10 auf das Fresnelprisma 7 und wird hier durch Lichtbrechung in den einzelnen Prismenzonen 8 in die Lichtstrahlen 11 abgelenkt. Der Brechungswinkel der verschiedenen Prismenzonen 8 ist dabei so gewählt, daß der Winkel zwischen zwei an benachbarten Prismenzonen austretenden Lichtstrahlen mit zunehmendem Abstand zur vordersten Prismenzone 12 abnimmt. Durch diese ortsabhängige Wahl des Brechungswinkels wird das im vorderen Bereich 13 des Fresnelprismas 7 einfallende Licht stärker gestreut, als im hinteren Bereich 14. Dadurch wird ein Anstieg der Konzentration der Lichtenergie im abgestrahlten Licht in Richtung des Pfeils 15 erreicht. Fallen die Lichtstrahlen 11 mit relativ hoher Lichtenergie auf weiter entfernte Oberflächen und Lichtstrahlen 11 mit relativ niedriger Lichtenergie auf nah gelegene Oberflächen, so ergibt sich im Ergebnis ein Beleuchtungsfeld mit relativ gleichmäßiger Lichtintensitätsverteilung, da die höhere Lichtenergie die Intensitätsverluste durch die Aufweitung des Lichtkegels in größerer Entfernung ausgleicht.

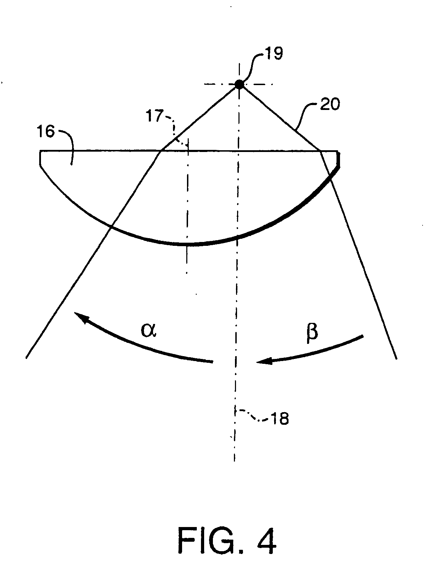

**Fig. 4** zeigt eine Kondensorlinse 16, deren optische Mittelachse 17 parallel verschoben zur optischen Mittelachse 18 einer Beleuchtungseinrichtung, von der lediglich das Leuchtmittel 19 dargestellt ist, verläuft. Durch die dezentrierte Anordnung der Kondensorlinse entsteht zusätzlich zu deren Sammelwirkung eine asymmetrische Ablenkung des symmetrisch einfallenden Lichtbündels 20. Der Ablenkungswinkel α auf der linken Seite der Mittelachse 18 ist infolge der dezentrierten Anordnung der Kondensorlinse größer als der Ablenkungswinkel β auf der rechten Seite der Mittelachse 18.

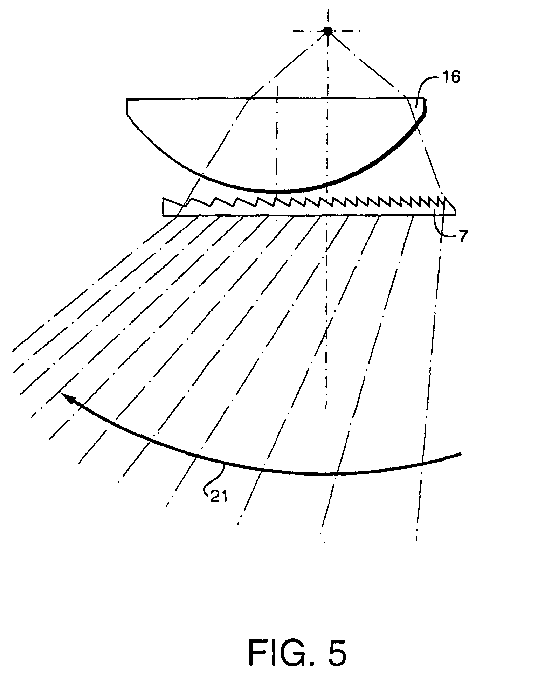

**Fig. 5** zeigt die Lichtbrechung durch die Kombination der Kondensorlinse 16 mit dem Fresnelprisma 7. Die Kondensorlinse 16 sammelt das Licht, so daß es entsprechend der Größe des Fresnelprismas 7 auf dieses auftrifft. Außerdem wird durch die asymmetrische Sammelwirkung der Kondensorlinse 16 der Konzentrationsanstieg der Lichtenergie in den austretenden Lichtstrahlen in Richtung des Pfeil 21 im Vergleich zur Brechung ohne Kondensorlinse noch verstärkt.

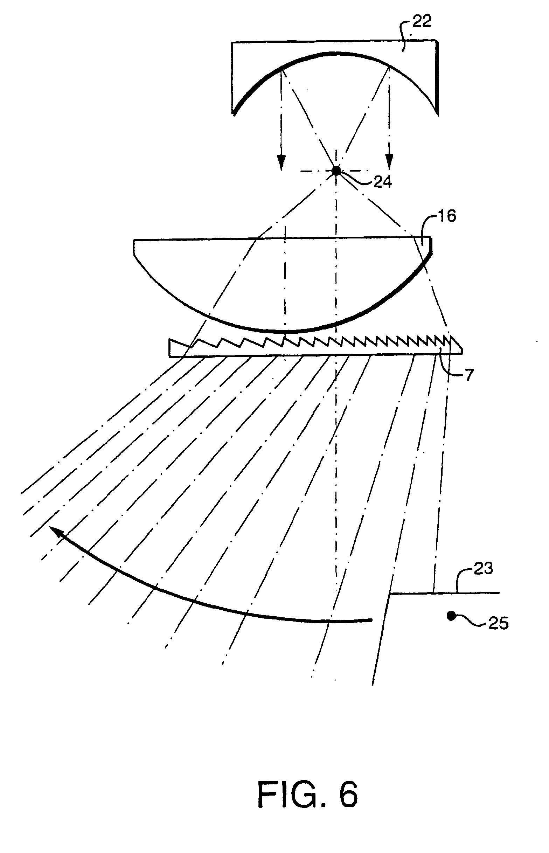

**Fig. 6** zeigt eine Anordnung gemäß **Fig. 5** mit einem zusätzlichen Kugelreflektor 22 und einer Blende 23. Durch den Kugelreflektor 22 wird das von dem Leuchtmittel 24 strahlenförmig ausgehende Licht zum Teil parallelisiert, so daß das in die Kondensorlinse 16 einfallende Licht einen relativ hohen Parallellichtanteil enthält. Da das abgestrahlte Strahlenbündel im wesentlichen nur parallele oder divergierende, aber kaum durchmischte Lichtstrahlen enthält, kann durch die Blende 23 eine scharf begrenzte Abschattung, beispielsweise im Bereich einer Fahrzeugtür, erreicht werden. Der Bereich 25 unterhalb der Blende 23 bleibt im wesentlichen dunkel, da hierhin keine Lichtstrahlen abgestrahlt werden.

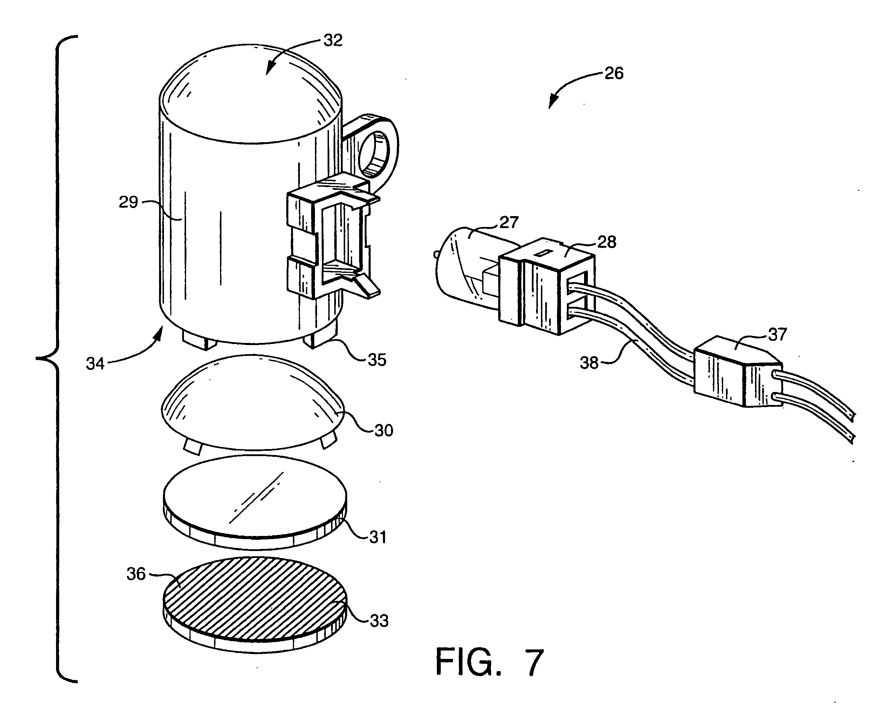

**Fig. 7** zeigt in einer Explosionsdarstellung den Aufbau einer Ausführungsform 26 einer erfindungsgemäßen Beleuchtungseinrichtung. Das als Halogenlampe ausgebildete Leuchtmittel 27 wird in eine Lampenfassung 28 eingesteckt, die mittels einer Clipsverbindung in dem einseitig offenen Tubus 29 befestigbar ist. Der hochglanzverspiegelte Kugelreflektor 30 wird von unten in den Tubus 29 eingeschoben, bis er an dessen formkomplementär ausgebildetem oberen Ende 32 zur Anlage kommt und dort einrastet. Die Kondensorlinse 31 und das Fresnelprisma 33 werden am unteren Ende 34 des Tubus 29 in die Rastklauen 35 eingerastet und verschließen den Tubus 29 nach unten hin. Die Prismenstruktur 36 auf der Oberseite des Fresnelprismas 33 weist dabei zur Innenseite des Tubus 29 hin, so daß die empfindlichen Flanken der Prismenzonen geschützt sind. Die Lampenfassung 28 wird mit dem Dichtungsbalg 37 abgedichtet, der Ausnehmungen für die Stromkabel 38 enthält.

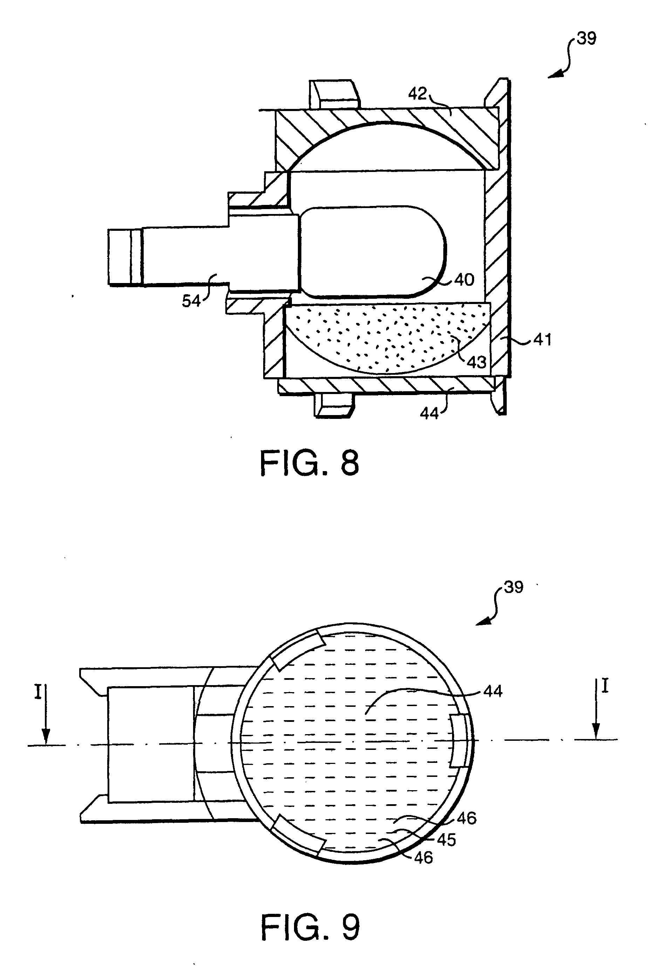

**Fig. 8** zeigt eine Ausführungsform 39 einer erfindungsgemäßen Beleuchtungseinrichtung entlang eines Schnittes I-I aus **Fig. 9.** Man erkennt ein Leuchtmittel 40, das in eine Lampenfassung 54 eingesteckt ist, einen Tubus 41, einen Kugelreflektor 42, eine Kondensorlinse 43 und ein Fresnelprisma 44. Es ergibt sich eine kompakte Beleuchtungseinrichtung die einfach in das Gehäuse eines Außenrückspiegels integriert werden kann.

**Fig. 9** zeigt die Ausführungsform 39 in Ansicht von unten. Die innenliegende Oberflächenstruktur auf der Oberseite des Fresnelprismas 44 ist durch die linear verlaufenden Trennlinien 45 zwischen den einzelnen Prismenzonen 46 angedeutet.

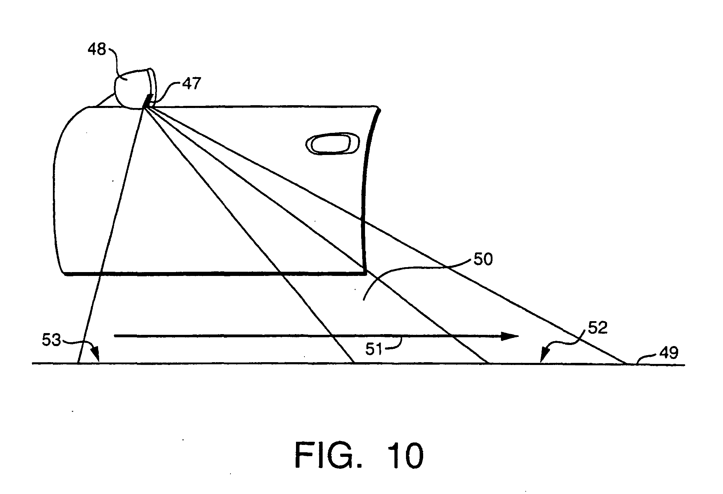

**Fig. 10** verdeutlicht die Möglichkeit zur Beeinflussung der Lichtintensität in einem Beleuchtungsfeld durch den Einsatz einer erfindungsgemäßen Beleuchtungseinrichtung. Eine verdeckt dargestellte Beleuchtungseinrichtung 47 ist im Inneren eines Außenrückspiegels 48 eingebaut. Aufgrund der Einbausituation der Leuchte im Bodenbereich des Außenspiegels 48 ergibt sich eine zur Fahrbahnoberfläche 49 im wesentlichen parallele Lichtaustrittsfläche. Die auf der Fahrbahn resultierende Lichtintensität, d. h. die Beleuchtungsstärke, sinkt mit dem Abstand von der Beleuchtungseinrichtung und mit dem Kosinus des Einfallwinkels. Um eine möglichst gleichmäßige Lichtintensitätsverteilung auf der Fahrbahnoberfläche 49 im Bereich des Einstiegs bis hin zum nicht dargestellten Hinterrad zu erreichen, muß die Lichtenergie im austretenden Strahlenbündel 50 in Richtung des Pfeils 51, das heißt in Richtung des nicht dargestellten Fahrzeughecks, konzentriert werden. Die in Richtung des Pfeils 51 ansteigende Konzentration der Lichtenergie ist schematisch durch die dunkler werdende Schraffur zur Darstellung des Strahlenbündels 50 angedeutet. Im Ergebnis ergibt sich eine gleichmäßige Lichtintensitätsverteilung auf der Fahrbahnoberfläche 49 im Einstiegsbereich, so daß die Beleuchtungsstärke im Bereich 52 im hintersten Teil des Einstiegsbereichs nur unwesentlich schwächer ist als die Beleuchtungsstärke im Bereich 53, direkt unterhalb der Beleuchtungseinrichtung 47.

## Patentansprüche

1. Beleuchtungseinrichtung zur Anordnung am Außen- oder Innenrückspiegel eines Kraftfahrzeugs mit einem Leuchtmittel, dessen Lichtstrahlen an einer Spiegelgehäuseöffnung austreten und an einem im Strahlengang angeordneten transparenten Lichtbrechungselement abgelenkt werden, wobei das plattenartige Lichtbrechungselement zumindest auf einer Seite eine Oberflächenstruktur aufweist, durch die das Lichtbrechungselement in mehrere Lichtbrechungszonen aufgeteilt wird, und wobei das Lichtbrechungselement in der Art eines Fresnelprismas (1) ausgebildet ist, und wobei die Lichtbrechungszonen (2) stufenförmig zusammengeschobenen Prismenzonen (3) von Prismenkörpern (4) entsprechen, so dass die Prismenzonen (6) linear parallel oder in zentrischen Kreisbögen zueinander verlaufend in dem Fresnelprisma (5) angeordnet sind.
**dadurch gekennzeichnet,**
**dass** vor dem Fresnelprisma (7) eine Kondensorlinse (16) im Strahlengang angeordnet ist.

2. Beleuchtungseinrichtung nach Anspruch 1
**dadurch gekennzeichnet,**
**dass** die Prismenzonen im Wesentlichen senkrecht zur Fahrzeuglängsachse verlaufen und das Licht zum Fahrzeugheck hin gebrochen wird.

3. Beleuchtungseinrichtung nach einem der Ansprüche 1 oder 2,
**dadurch gekennzeichnet,**
**dass** zumindest zwei Prismenzonen (8) einen unterschiedlichen Brechungswinkel aufweisen.

4. Beleuchtungseinrichtung nach einem der Ansprüche 1 bis 3,
**dadurch gekennzeichnet,**
**dass** der Brechungswinkel der einzelnen Prismenzonen (8) derart gewählt ist, dass der Winkel zwischen zwei an benachbarten Prismenzonen (8) austretenden Lichtstrahlen (11) mit zunehmendem Abstand zur vordersten Prismenzone (12) abnimmt.

5. Beleuchtungseinrichtung nach einem der Ansprüche 1 bis 4,
**dadurch gekennzeichnet,**
**dass** die Prismenstruktur (36) des Fresnelprismas (33) zur Innenseite eines Gehäuses (29) weisend in der Beleuchtungseinrichtung angeordnet ist.

6. Beleuchtungseinrichtung nach einem der Ansprüche 1 bis 5,
**dadurch gekennzeichnet,**
**dass** die optische Mittelachse (17) der Kondensorlinse (16) parallel verschoben zur optischen Mittelachse (19) der Beleuchtungseinrichtung verläuft.

7. Beleuchtungseinrichtung nach einem der Ansprüche 1 bis 6,
**dadurch gekennzeichnet,**
**dass** hinter dem Fresnelprisma (7) eine Blende (23) im Strahlengang angeordnet ist, die den Strahlengang bereichsweise unterbricht.

8. Beleuchtungseinrichtung nach einem der Ansprüche 1 bis 7,
**dadurch gekennzeichnet,**
**dass** in der Beleuchtungseinrichtung ein Reflektor, insbesondere ein Kugelreflektor (30, 42), angeordnet ist.

9. Beleuchtungseinrichtung nach einem der Ansprüche 1 bis 8,
**dadurch gekennzeichnet,**
**dass** das Leuchtmittel in einem Tubus (29) angeordnet ist, an dessen erstem axialen Ende (32) ein Reflektor (30) angeordnet ist und an dessen gegenüberliegendem Ende (34) der erzeugte Lichtstrahl austreten kann, wobei zumindest ein Fresnelprisma (33) im Strahlengang angeordnet ist.

10. Beleuchtungseinrichtung nach einem der Ansprüche 1 bis 9,
**dadurch gekennzeichnet,**
**dass** der Tubus Lichtstrahlen, die nicht direkt auf das Fresnelprisma, die Kondensorlinse oder den Reflektor fallen, absorbiert.

11. Beleuchtungseinrichtung nach Anspruch 10,
**dadurch gekennzeichnet,**
**dass** der Tubus aus einem Material hergestellt ist, das Lichtwellen im sichtbaren Wellenlängenbereich absorbiert und für Lichtwellen im Infrarotbereich, insbesondere im Wellenlängenbereich der Wärmestrahlung bis 4 µm, transparent ist.

12. Beleuchtungseinrichtung nach Anspruch 11,
**dadurch gekennzeichnet,**
**dass** das Material zur Herstellung des Tubus aus einer infrarottransparenten Grundkomponente besteht, die mit einem Farbstoff dotiert ist, wobei der Farbstoff sichtbares Licht absorbiert und für Infrarotstrahlung transparent ist.

## Claims

1. Lighting device for arrangement on the external or internal rear-view mirror of a motor vehicle, said lighting device having a lighting means whose light beams emerge at an opening in the mirror housing and are deflected at a transparent light-refracting element arranged in the beam path, wherein the platelike light-refracting element has, at least on one side, a surface structure by which said light-refracting element is divided up into a number of light-refracting zones, and wherein said light-refracting element is constructed in the manner of a Fresnel prism (1), and wherein the light-refracting zones (2) correspond to prism zones (3), which are pushed together in a step-shaped manner, of prism bodies (4), so that the prism zones (6) are arranged in the Fresnel prism (5) in a manner extending linearly parallel or in concentric circular arcs in relation to one another,
**characterised in that**
a condenser lens (16) is arranged in the beam path, in front of the Fresnel prism (7).

2. Lighting device according to claim 1,
**characterised in that**
the prism zones extend substantially perpendicular to the longitudinal axis of the vehicle and the light is refracted towards the rear of the vehicle.

3. Lighting device according to one of claims 1 or 2,
**characterised in that**
at least two prism zones (8) have a different angle of refraction.

4. Lighting device according to one of claims 1 to 3,
**characterised in that**
the angle of refraction of the individual prism zones (8) is chosen in such a way that the angle between two light beams (11) emerging at adjacent prism zones (8) decreases as the distance from the foremost prism zone (12) increases.

5. Lighting device according to one of claims 1 to 4,
**characterised in that**
the prism structure (36) of the Fresnel prism (33) is arranged in the lighting device in a manner pointing towards the inside of a housing (29).

6. Lighting device according to one of claims 1 to 5,
**characterised in that**
the optical central axis (17) of the condenser lens (16) extends in a manner displaced parallel in relation to the optical central axis (19) of the lighting device.

7. Lighting device according to one of claims 1 to 6,
**characterised in that**
a diaphragm (23), which interrupts the beam path in certain regions, is arranged in said beam path, behind the Fresnel prism (7).

8. Lighting device according to one of claims 1 to 7,
**characterised in that**
a reflector, in particular a spherical reflector (30, 42), is arranged in the lighting device.

9. Lighting device according to one of claims 1 to 8,
**characterised in that**
the lighting means is arranged in a tube (29), at the first axial end (32) of which a reflector (30) is arranged and at the opposite end (34) of which the light beam generated can emerge, at least one Fresnel prism (33) being arranged in the beam path.

10. Lighting device according to one of claims 1 to 9,
**characterised in that**
the tube absorbs light beams which do not fall directly on the Fresnel prism, the condenser lens or the reflector.

11. Lighting device according to claim 10,
**characterised in that**
the tube is manufactured from a material which absorbs light waves in the visible wavelength range and is transparent to light waves in the infrared range, particularly in the wavelength range of thermal radiation up to 4 µm.

12. Lighting device according to claim 11,
**characterised in that**
the material for manufacturing the tube consists of an infrared-transparent basic component which is doped with a dye, the said dye absorbing visible light and being transparent to infrared radiation.

## Revendications

1. Dispositif d'éclairage à disposer sur le rétroviseur extérieur ou intérieur d'un véhicule à moteur, avec un moyen lumineux, dont les rayons lumineux sortent par une ouverture du boîtier de miroir et sont déviés sur un élément transparent de réfraction de la lumière disposé sur le trajet des rayons, l'élément de réfraction de la lumière en forme de plaque présentant au moins sur un côté une structure de surface par laquelle l'élément de réfraction de la lumière est divisé en plusieurs zones de réfraction de la lumière, l'élément de réfraction de la lumière étant configuré à la manière d'un prisme de Fresnel (1), les zones de réfraction de la lumière (2) correspondant à des zones de prisme décalées en échelons (3) de corps prismatiques (4), de telle façon que les zones de prisme (6) soient disposées de manière à s'étendre linéairement et parallèlement ou en arcs de cercle concentriques l'une par rapport à l'autre dans le prisme de Fresnel (5), **caractérisé en ce qu'**une lentille de condenseur (16) est disposée avant le prisme de Fresnel (7) sur le trajet des rayons.

2. Dispositif d'éclairage selon la revendication 1, **caractérisé en ce que** les zones de prisme sont sensiblement perpendiculaires à l'axe longitudinal du véhicule et la lumière est réfractée en direction de l'arrière du véhicule.

3. Dispositif d'éclairage selon l'une quelconque des revendications 1 ou 2, **caractérisé en ce qu'**au moins deux zones de prisme (8) présentent un angle de réfraction différent.

4. Dispositif d'éclairage selon l'une quelconque des revendications 1 à 3, **caractérisé en ce que** l'angle de réfraction des zones de prisme individuelles (8) est choisi de telle façon que l'angle entre deux rayons lumineux (11 ) sortant de zones de prisme voisines (8) diminue lorsque la distance par rapport à la zone de prisme la plus antérieure (12) augmente.

5. Dispositif d'éclairage selon l'une quelconque des revendications 1 à 4, **caractérisé en ce que** la structure prismatique (36) du prisme de Fresnel (33) est disposée dans le dispositif d'éclairage en étant tournée vers un côté intérieur d'un boîtier (29).

6. Dispositif d'éclairage selon l'une quelconque des revendications 1 à 5, **caractérisé en ce que** l'axe central optique (17) de la lentille de condenseur (16) est décalé, de manière parallèle, par rapport à l'axe central optique (19) du dispositif d'éclairage.

7. Dispositif d'éclairage selon l'une quelconque des revendications 1 à 6, **caractérisé en ce qu'**un écran (23), qui interrompt par zones le trajet des rayons, est disposé derrière le prisme de Fresnel (7) dans le trajet des rayons.

8. Dispositif d'éclairage selon l'une quelconque des revendications 1 à 7, **caractérisé en ce qu'**un réflecteur, en particulier un réflecteur sphérique (30, 42), est disposé dans le dispositif d'éclairage.

9. Dispositif d'éclairage selon l'une quelconque des revendications 1 à 8, **caractérisé en ce que** le moyen lumineux est disposé dans un tube (29), à la première extrémité axiale (32) duquel est disposé un réflecteur (30) et à l'extrémité opposée (34) duquel le rayon lumineux produit peut sortir, au moins un prisme de Fresnel (33) étant disposé dans le trajet des rayons.

10. Dispositif d'éclairage selon l'une quelconque des revendications 1 à 9, **caractérisé en ce que** le tube absorbe des rayons lumineux qui ne tombent pas directement sur le prisme de Fresnel, la lentille de condenseur ou le réflecteur.

11. Dispositif d'éclairage selon la revendication 10, **caractérisé en ce que** le tube est fabriqué en un matériau qui absorbe des ondes lumineuses dans le domaine des longueurs d'onde visibles et qui est transparent pour des ondes lumineuses situées dans le domaine infrarouge, en particulier dans le domaine des longueurs d'onde du rayonnement thermique jusque 4 µm.

12. Dispositif d'éclairage selon la revendication 11, **caractérisé en ce que** le matériau pour la fabrication du tube est constitué d'un composant de base transparent aux infrarouges, qui est dopé avec un colorant, le colorant absorbant la lumière visible et étant transparent au rayonnement infrarouge.
